# EUROPÄISCHE PATENTSCHRIFT

(11) **EP 4 320 354 B1**
(45) Veröffentlichungstag und Bekanntmachung des Hinweises auf die Patenterteilung: **04.12.2024**
(21) Anmeldenummer: 22715586.8
(22) Anmeldetag: 15.03.2022
(51) Int. Cl.: F04F 5/16, F04F 5/48, F04F 5/46, H01M 8/04082, H01M 8/04089

(54) **VORRICHTUNG ZUR REZIRKULATION VON ANODENGAS IN EINEM ANODENKREIS EINES BRENNSTOFFZELLENSYSTEMS, BRENNSTOFFZELLENSYSTEM**
DEVICE FOR RECIRCULATING ANODE GAS IN AN ANODE CIRCUIT OF A FUEL CELL SYSTEM, FUEL CELL SYSTEM
DISPOSITIF DE RECIRCULATION DE GAZ D'ANODE DANS UN CIRCUIT D'ANODE D'UN SYSTÈME DE PILES À COMBUSTIBLE, SYSTÈME DE PILES À COMBUSTIBLE

(30) Priorität: 08.04.2021 DE 102021203454
(43) Veröffentlichungstag der Anmeldung: 14.02.2024
(73) Patentinhaber: Robert Bosch GmbH, 70442 Stuttgart (DE)
(72) Erfinder: MAGEL, Hans-Christoph, 72764 Reutlingen (DE)
(86) Internationale Anmeldenummer: PCT/EP2022/056737
(87) Internationale Veröffentlichungsnummer: WO 2022/214282

(56) Entgegenhaltungen:
- WO-A1-2004/010006
- WO-A1-2020/148079
- DE-A1- 102017 220 800
- DE-A1- 102019 214 654
- US-A1- 2002 022 172
- US-A1- 2009 317 691

## Beschreibung

Die Erfindung betrifft eine Vorrichtung zur Rezirkulation von Anodengas in einem Anodenkreis eines Brennstoffzellensystems. Ferner wird ein Brennstoffzellensystem mit einer erfindungsgemäßen Vorrichtung vorgeschlagen.

### Stand der Technik

Eine Brennstoffzelle wandelt Wasserstoff und Sauerstoff in elektrische Energie. Der Wasserstoff wird hierzu einer Anode und der Sauerstoff einer Kathode der Brennstoffzelle zugeführt. Da aus der Brennstoffzelle austretendes Anodengas in der Regel noch Restmengen an Wasserstoff enthält, wird es rezirkuliert und der Anode erneut zugeführt. Die Rezirkulation kann dabei aktiv mit Hilfe eines Rezirkulationsgebläses und/oder passiv mit Hilfe einer Strahlpumpe bewirkt werden.

Aus der US 2002/0022172 A1 ist Fluidversorgungsvorrichtung für eine Brennstoffzelle bekannt. Die aus der US 2002/0022172 A1 bekannte Fluidversorgungsvorrichtung für eine Brennstoffzelle kann gewisse Nachteile aufweisen. Gelangt eine Strahlpumpe zum Einsatz, kann sich dies als problematisch erweisen. Denn üblicherweise kann ohne Aktivierung der Rezirkulation kein frischer Wasserstoff zudosiert werden. Als ebenfalls problematisch stellt sich die nachlassende Rezirkulationsleistung der Strahlpumpe im Teillastbereich dar. Um hier Abhilfe zu schaffen, kann eine kleinere zweite Strahlpumpe eingesetzt werden, die auf den Teillastbereich ausgelegt und parallel zur ersten Strahlpumpe angeordnet ist. Wird nur eine Strahlpumpe aktiviert, kann es jedoch zu einem Rückströmen der Fördermenge der aktiven Strahlpumpe durch die die inaktive Strahlpumpe kommen, so dass dieser Strömungspfad gesperrt werden muss, beispielsweise mit Hilfe eines integrierten Rückschlagventils. Dadurch entsteht jedoch ein Druckverlust, der die Rezirkulationsleistung der aktiven Strahlpumpe verringert.

Die vorliegende Erfindung ist mit der Lösung dieser Probleme befasst. Zum Einen soll das Zudosieren von frischem Wasserstoff ohne Aktivierung der Rezirkulation ermöglicht werden. Zum Anderen soll bei parallel geschalteten Strahlpumpen ein Rückströmen von Anodengas durch die jeweils inaktive Strahlpumpe verhindert werden, und zwar möglichst verlustarm.

Zur Lösung der Probleme wird die Vorrichtung mit den Merkmalen des Anspruchs 1 vorgeschlagen. Vorteilhafte Weiterbildungen der Erfindung sind den Unteransprüchen zu entnehmen. Ferner wird ein Brennstoffzellensystem mit einer erfindungsgemäßen Vorrichtung angegeben.

### Offenbarung der Erfindung

Die zur Rezirkulation von Anodengas in einem Anodenkreis eines Brennstoffzellensystems vorgeschlagene Vorrichtung umfasst mindestens eine Strahlpumpe mit einer Treibdüse zum Einbringen von frischem Anodengas, vorzugsweise Wasserstoff, einen Zulauf für rezirkuliertes Anodengas und einen Ablauf für frisches und rezirkuliertes Anodengas. Im Bereich des Zulaufs ist dabei ein aktiv steuerbares Ventil zum Schließen und Freigeben des Zulaufs angeordnet. Das Ventil umfasst eine Magnetbaugruppe zum Einwirken auf einen hin und her beweglichen Magnetanker sowie eine Ventilfeder.

Mit Hilfe des aktiv steuerbaren Ventils kann der Zulauf geschlossen bzw. gesperrt werden, so dass kein Anodengas über den Anodenkreis rezirkuliert wird. Auf diese Weise kann ohne Rezirkulation frischer Wasserstoff über die Strahlpumpe in den Anodenkreis eingebracht werden, beispielsweise zum Trockenfahren des Anodenkreises. Sofern die Vorrichtung mehrere parallel geschaltete Strahlpumpen umfasst, kann mit Hilfe des aktiv steuerbaren Ventils eine Strahlpumpe gezielt deaktiviert werden, um ein Rückströmen von Anodengas durch die inaktive Strahlpumpe zu verhindern.

Das aktiv steuerbare Ventil kann als einfaches, kostengünstiges Schaltventil ausgeführt sein, das den Zulauf schließt oder freigibt. Dies ist möglich, da zum Abschalten der Rezirkulation keine absolute Dichtheit des Ventils erforderlich ist und zudem keine Leckage nach außen entstehen kann.

Die Magnetbaugruppe des aktiv steuerbaren Ventils kann ein einfacher Linearmagnetaktor sein. Da im Anodenkreis lediglich geringe Differenzdrücke auftreten, bedarf es auch nur einer geringen Aktorkraft, so dass die Magnetbaugruppe entsprechend klein ausgelegt werden kann.

Bevorzugt ist die Magnetbaugruppe des Ventils außenhalb eines wasserstoffführenden Bereichs der Vorrichtung angeordnet. Auf diese Weise kann eine hohe Dichtheit des wasserstoffführenden Bereichs erreicht werden. Zudem werden mögliche Zündquellen im wasserstoffführenden Bereich vermieden.

Alternativ oder ergänzend wird vorgeschlagen, dass die Wirkrichtung der Magnetbaugruppe senkrecht zur Hauptströmungsrichtung im Zulauf verläuft. Das heißt, dass die mit Hilfe der Magnetbaugruppe erzeugte Magnetkraft in der Weise auf den Magnetanker einwirkt, dass dieser sich senkrecht zur Hauptströmungsrichtung im Zulauf hin und her bewegt. Auf diese Weise kann durch einfaches hin und her Bewegen des Magnetankers der Zulauf geschlossen und freigegeben werden.

Zum Schließen und Freigeben des Zulaufs ist vorzugsweise der Magnetanker mit einem Ventilschließelement gekoppelt. Der Magnetanker und das Ventilschließelement können somit aus unterschiedlichen Werkstoffen gefertigt sein. Alternativ wird vorgeschlagen, dass der Magnetanker zugleich ein Ventilschließelement ausbildet. Auf diese Weise kann das aktiv steuerbare Ventil noch einfacher und kostengünstiger hergestellt werden. Zum Schließen des Zulaufs ist vorzugsweise das Ventilschließelement in Eingriff mit einer seitlichen Öffnung des Zulaufs bringbar. Das heißt, dass das Ventilschließelement beim Schließen des Ventils nicht nur zur Anlage mit einer den Zulauf begrenzenden Wandfläche gebracht wird, sondern in eine Öffnung der Wandfläche eingreift. Auf diese Weise kann die Dichtheit des Ventils verbessert werden.

In Weiterbildung der Erfindung wird vorgeschlagen, dass der Magnetanker in axialer Richtung von mindestens einer Druckausgleichsöffnung durchsetzt ist. Dies ist insbesondere von Vorteil, wenn der Magnetanker oder das Ventilschließ-element beim Schließen in eine seitliche Öffnung des Zulaufs eingreift. Da die Öffnung mit Anodengas gefüllt ist, wird auf diese Weise vermieden, dass das Ventil gegen den sich in der Öffnung aufbauenden Druck geschlossen werden muss.

Des Weiteren wird vorgeschlagen, dass der Magnetanker zur Aufnahme der Ventilfeder zumindest abschnittsweise hülsenförmig ausgebildet ist. Das aktiv steuerbare Ventil kann somit, insbesondere in axialer Richtung, sehr kompakt ausgeführt werden. Zugleich wird die Masse des Magnetankers verringert.

Gemäß einer bevorzugten Ausführungsform der Erfindung umfasst die Magnetbaugruppe eine von einem Außenpolkörper umgebene Magnetspule, in die ein topf- oder hülsenförmiges Trennelement aus einem amagnetischen Material eingesetzt ist, über welches der Magnetanker geführt ist. Der Außenpolkörper erhöht die Magnetkraft der Magnetspule. Zugleich schützt er die Magnetspule vor äußeren Einwirkungen. Das in die Magnetspule eingesetzte topf- oder hülsenförmige Trennelement verhindert beim Führen des Magnetankers einen magnetischen Kurzschluss zwischen dem Magnetanker und der Magnetbaugruppe. Zudem kann mit Hilfe des Trennelements der wasserstoffführende Bereich gegenüber der Magnetbaugruppe abgedichtet werden.

Vorteilhafterweise ist das topf- oder hülsenförmige Trennelement über einen Ringbund an einer Gehäuseaußenwandfläche der Vorrichtung unmittelbar oder mittelbar über ein Dichtelement abgestützt. Auf diese Weise kann das Trennelement zugleich zur Abdichtung des wasserstoffführenden Bereichs nach außen eingesetzt werden. Durch die Anordnung eines Dichtelements, insbesondere eines Dichtrings, zwischen dem Trennelement und der Gehäuseaußenwandfläche kann die Dichtwirkung optimiert werden. Über den Ringbund kann ferner das Trennelement einfach an der Gehäuseaußenwandfläche befestigt werden.

Der Zulauf, in dem das aktiv steuerbare Ventil angeordnet ist, mündet vorzugsweise in einen Ansaugraum der Strahlpumpe, wobei in dem Ansaugraum die Treibdüse angeordnet ist. Mit Hilfe der Treibdüse kann eine Treibkraft erzeugt werden, welche die Rezirkulation von Anodengas bewirkt. Wird jedoch der Zulauf mit Hilfe des aktiv steuerbaren Ventils geschlossen, kann die Rezirkulation gezielt abgeschaltet werden. Der Ansaugraum ist vorzugsweise über ein Mischrohr und einen Diffusor mit dem Ablauf der Strahlpumpe verbunden. Im Ansaugraum treffen rezirkuliertes und frisches Anodengas aufeinander. Im anschließenden Mischrohr findet die Durchmischung von rezirkuliertem und frischem Anodengas statt. Um die Treibdüse koaxial zum Mischrohr und Diffusor anordnen zu können, mündet vorzugsweise der Zulauf für rezirkuliertes Anodengas seitlich in den Ansaugraum.

Um die Nutzung von frischem Anodengas als Treibmedium zu ermöglichen, kann der Treibdüse ein Regelventil vorgeschaltet sein. Alternativ kann die Treibdüse in ein Dosierventil für frisches Anodengas integriert sein, so dass eine besonders kompakt bauende Anordnung mit wenigen Komponenten geschaffen wird.

Vorteilhafterweise umfasst die Vorrichtung mindestens zwei Strahlpumpen, die parallel geschaltet und lastabhängig aktivierbar sind. Auf diese Weise kann auch im Teillastbereich eine ausreichende Rezirkulationsleistung sichergestellt werden. Zugleich kann im Betrieb von nur einer Strahlpumpe mit Hilfe des im Zulauf angeordneten, aktiv steuerbaren Ventils ein Rückströmen der Fördermenge der aktiven Strahlpumpe durch die inaktive Strahlpumpe verhindert werden.

Da der bevorzugte Anwendungsbereich ein Brennstoffzellensystem ist, wird ferner ein Brennstoffzellensystem mit einer erfindungsgemäßen Vorrichtung vorgeschlagen. Die Vorrichtung ist dabei in einen Anodenkreis des Brennstoffzellensystems integriert. Mit Hilfe der Vorrichtung kann aus mindestens einer Brennstoffzelle austretendes Anodengas rezirkuliert werden, so dass der Brennstoffbedarf sinkt. Mit Hilfe des im Zulauf der Strahlpumpe angeordneten, aktiv steuerbaren Ventils kann die Rezirkulation abgeschaltet werden. Sofern die Rezirkulation mit Hilfe mehrerer parallel geschalteter Strahlpumpen bewirkt wird, kann zumindest eine Strahlpumpe deaktiviert und ein Rückströmen von Anodengas durch diese Strahlpumpe aktiv verhindert werden.

Bevorzugte Ausführungsformen der Erfindung werden nachfolgend anhand der beigefügten Zeichnungen näher erläutert. Diese zeigen:
Figur 1 einen schematischen Längsschnitt durch eine erste erfindungsgemäße Vorrichtung zur Rezirkulation von Anodengas in einem Betriebszustand, in dem der Zulauf geschlossen ist,
Figur 2 einen schematischen Längsschnitt durch die Vorrichtung der Figur 1 in einem Betriebszustand, in dem der Zulauf freigegeben ist,
Figur 3 einen schematischen Längsschnitt durch eine zweite erfindungsgemäße Vorrichtung zur Rezirkulation von Anodengas und
Figur 4 eine schematische Darstellung eines Anodenkreises eines erfindungsgemäßen Brennstoffzellensystems.

### Ausführliche Beschreibung der Zeichnungen

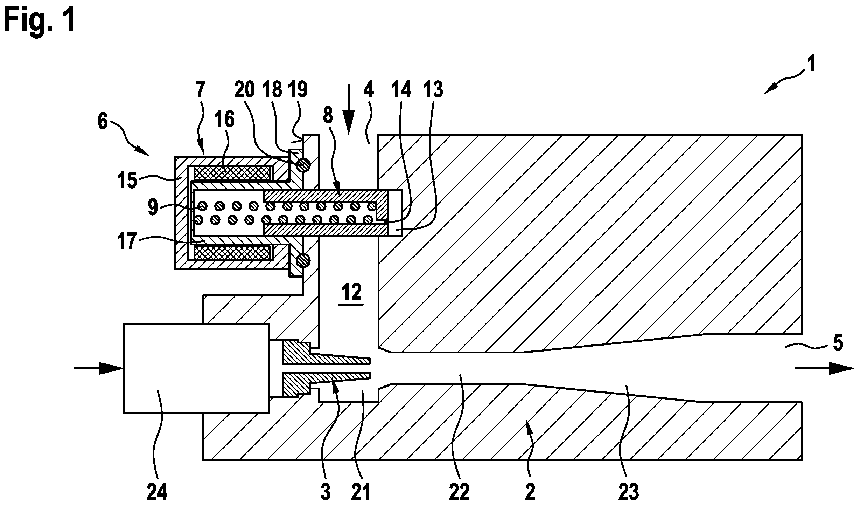

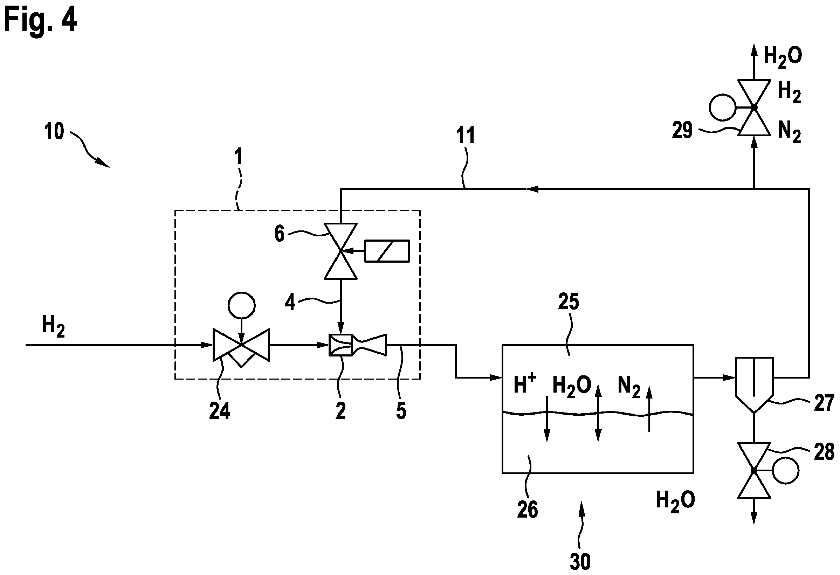

Die in der Figur 1 schematisch dargestellte erfindungsgemäße Vorrichtung 1 dient der Rezirkulation von Anodengas in einem Anodenkreis 11 eines Brennstoffzellensystems 10 (siehe Figur 4). Die Vorrichtung 1 umfasst hierzu eine Strahlpumpe 2, die über einen Zulauf 4 sowie einen Ablauf 5 in den Anodenkreis 11 integriert bzw. integrierbar ist. Ferner weist die Strahlpumpe 2 eine Treibdüse 3 mit einem vorgeschalteten Regelventil 24 auf, mittels dessen frisches Anodengas in einen Ansaugraum 21 der Strahlpumpe 2 einbringbar ist. Das frische Anodengas dient zugleich als Treibmedium. Denn beim Einbringen von frischem Anodengas mit Hilfe der Treibdüse wird eine Treibkraft erzeugt, die im Anodenkreis 11 zur Rezirkulation von Anodengas führt. Das rezirkulierte Anodengas wird über den Zulauf 4 in den Ansaugraum 21 eingeleitet. Der Zulauf 4 mündet seitlich in den Ansaugraum 21, während die Treibdüse 3 koaxial in Bezug auf ein Mischrohr 22 und einen Diffusor 23 der Strahlpumpe 2 angeordnet ist.

In den Zulauf 4 ist ein aktiv steuerbares Ventil 6 integriert, das eine Magnetbaugruppe 7 zum Einwirken auf einen hin und her beweglichen Magnetanker 8 aufweist. Das Ventil 6 ist vorliegend als stromlos geschlossenes Ventil ausgeführt, das heißt, dass bei unbestromter Magnetbaugruppe 7 das Ventil 6 geschlossen ist. In dieser Schaltstellung ist auch der Zulauf 4 geschlossen, so dass die Rezirkulation abgeschaltet ist. Die Schließkraft wird mit Hilfe einer Ventilfeder 9 erzeugt, die hierzu am Magnetanker 8 abgestützt ist.

Die Magnetbaugruppe 7 des Ventils 6 ist außenliegend angeordnet, das heißt außerhalb eines wasserstoffführenden Bereichs 12. Dies erleichtert die Abdichtung des wasserstoffführenden Bereichs 12 nach außen. Ferner wird die Ausbildung einer möglichen Zündquelle im wasserstoffführenden Bereich 12 vermieden. Die Magnetbaugruppe 7 umfasst einen Außenpolkörper 15, in dem eine Magnetspule 16 aufgenommen ist. In die Magnetspule 16 ist ein topfförmiges Trennelement 17 eingesetzt, das aus einem amagnetischen Material gefertigt ist. Das topfförmige Trennelement 17 dient der Führung des Magnetankers 8 und verhindert zugleich einen magnetischen Kurzschluss zwischen dem Magnetanker 8 und der Magnetbaugruppe 7. Darüber hinaus erfüllt das Trennelement 17 eine Dichtfunktion. Zum Einen trennt es den wasserstoffführenden Bereich 12 von der Magnetbaugruppe 7. Zum Anderen dichtet es den wasserstoffführenden Bereich 12 nach außen ab. Das Trennelement 17 weist hierzu einen Ringbund 18 auf, über den es an einer Gehäuseaußenwandfläche 19 der Vorrichtung 1 abgestützt ist. Zur Erhöhung der Dichtwirkung ist zwischen dem Ringbund 18 und der Gehäuseaußenwandfläche 19 ein Dichtelement 20 eingelegt.

Der Magnetanker 8 des aktiv steuerbaren Ventils 6 bildet vorliegend zugleich ein Ventilschließelement aus, das in Schließstellung in eine seitliche Öffnung 13 einer den Zulauf begrenzenden Wandung eingreift. Um die Ausbildung eines die Bewegungen des Magnetankers 8 behindernden Druckpolsters innerhalb der Öffnung 13 zu verhindern, weist der Magnetanker 8 eine Druckausgleichsöffnung 14 auf. Der Magnetanker 8 ist im Wesentlichen hülsenförmig ausgebildet, so dass er die Ventilfeder 9 aufnehmen kann. Andernends ist die Ventilfeder 9 an dem topfförmigen Trennelement 17 abgestützt.

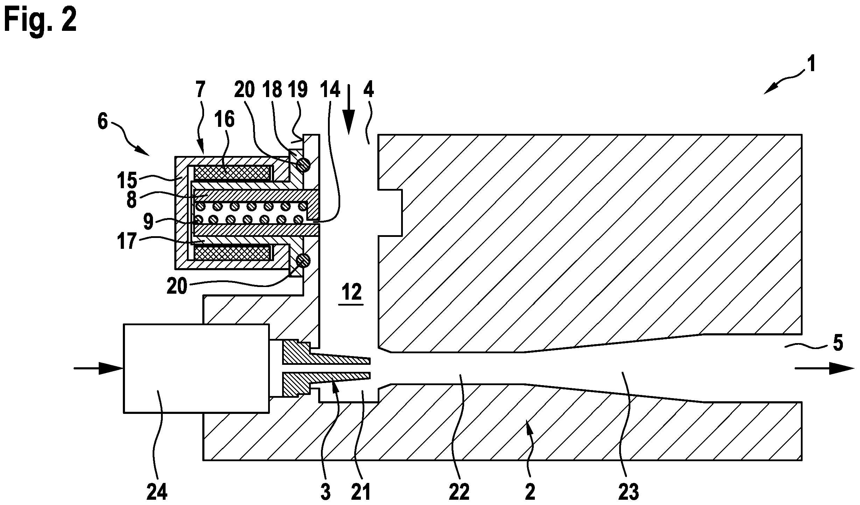

Wird die Magnetspule 16 der Magnetbaugruppe 7 bestromt, bildet sich ein Magnetfeld aus, dessen Magnetkraft den Magnetanker 8 in Richtung der Magnetspule 16 bewegt. Dies führt zum Öffnen des Ventils 6, so dass der Zulauf 4 freigegeben ist. In dieser Schaltstellung des Ventils 6 kann Anodengas rezirkuliert werden (siehe Figur 2). Um die Rezirkulation abzuschalten, muss das Ventil 6 geschlossen werden. Hierzu wird die Bestromung der Magnetspule 16 beendet, so dass die Ventilfeder 9 den Magnetanker 8 in seine Ausgangslage zurückstellt (Figur 1).

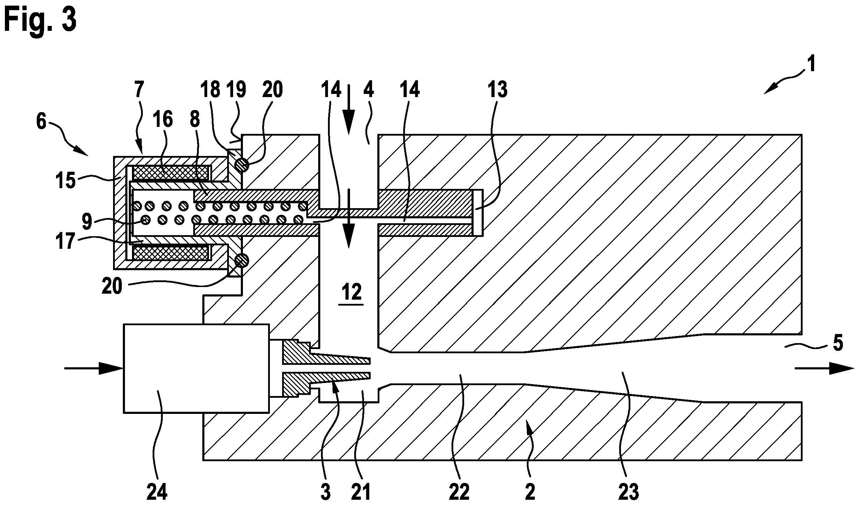

Der Figur 3 ist eine weitere erfindungsgemäße Vorrichtung 1 zur Rezirkulation von Anodengas zu entnehmen. Diese unterscheidet sich von der der Figuren 1 und 2 lediglich durch die Ausgestaltung des Ventils 6. In der Figur 3 ist das Ventil 6 nicht als stromlos geschlossenes, sondern als stromlos offenes Ventil ausgeführt. Der Magnetanker 8 weist hierzu eine etwas andere Form auf. Im Übrigen kann das Ventil 6 analog dem Ventil 6 der Figuren 1 und 2 ausgebildet sein.

Die beispielhaft in den Figuren 1 bis 3 dargestellten erfindungsgemäßen Vorrichtungen 1 gelangen insbesondere in einem Anodenkreis 11 eines Brennstoffzellensystems 10 zum Einsatz. Dies ist schematisch in der Figur 4 dargestellt.

Der dargestellte Anodenkreis 11 führt über eine Anode 25 einer Brennstoffzelle 30, die Wasserstoff zusammen mit Sauerstoff in elektrische Energie wandelt. Als Sauerstofflieferant dient Luft, die über einen in der Figur 4 nicht weiter dargestellten Kathodenpfad einer Kathode 26 der Brennstoffzelle 30 zugeführt wird.

Frischer Wasserstoff (H₂) wird über ein Regelventil 24 und eine Strahlpumpe 2 in den Anodenkreis 11 eingebracht. Das Regelventil 24 und die Strahlpumpe 2 bilden eine Vorrichtung 1 zur Rezirkulation von Anodengas aus. In der Strahlpumpe 2 vermischen sich demnach frisches sowie rezirkuliertes Anodengas. Da rezirkuliertes Anodengas sich über die Zeit mit Stickstoff (N₂) anreichert, das von der Kathodenseite auf die Anodenseite diffundiert, muss der Anodenkreis von Zeit zu Zeit gespült werden. Hierzu ist in den Anodenkreis 11 ein Purgeventil 29 integriert. Dem Purgeventil 29 vorgelagert sind ist ein Wasserabscheider 27 und ein Drainventil 28, mit deren Hilfe im Betrieb des Brennstoffzellensystems 10 anfallendes Produktwasser (H₂O) aus dem Anodenkreis 11 entfernt werden kann.

Die Vorrichtung 1 zur Rezirkulation von Anodengas ist über einen Zulauf 4 und einen Ablauf 5 an den Anodenkreis 11 angeschlossen. In den Zulauf 4 ist dabei ein aktiv steuerbares Ventil 6 integriert. In Abhängigkeit von der Schaltstellung des Ventils 6 ist der Zulauf 4 freigegeben oder verschlossen. Auf diese Weise kann auch frisches Anodengas über die Strahlpumpe 2 eingebracht werden, ohne das Anodengas rezirkuliert wird. Mit Hilfe des aktiv steuerbaren Ventils 6 kann somit die Rezirkulation abgeschaltet werden.

## Patentansprüche

1. Vorrichtung (1) zur Rezirkulation von Anodengas in einem Anodenkreis (11) eines Brennstoffzellensystems (10), umfassend mindestens eine Strahlpumpe (2) mit einer Treibdüse (3) zum Einbringen von frischem Anodengas, vorzugsweise Wasserstoff, einen Zulauf (4) für rezirkuliertes Anodengas und einen Ablauf (5) für frisches und rezirkuliertes Anodengas, **dadurch gekennzeichnet, dass** sich im Bereich des Zulaufs (4) ein aktiv steuerbares Ventil (6) zum Schließen und Freigeben des Zulaufs (4) angeordnet ist, das eine Magnetbaugruppe (7) zum Einwirken auf einen hin und her beweglichen Magnetanker (8) sowie eine Ventilfeder (9) umfasst.

2. Vorrichtung (1) nach Anspruch 1,
**dadurch gekennzeichnet, dass** die Magnetbaugruppe (7) des Ventils (6) außenhalb eines Wasserstoffführenden Bereichs (12) der Vorrichtung (1) angeordnet ist und/oder die Wirkrichtung der Magnetbaugruppe (7) senkrecht zur Hauptströmungsrichtung im Zulauf (4) verläuft.

3. Vorrichtung (1) nach Anspruch 1 oder 2,
**dadurch gekennzeichnet, dass** der Magnetanker (8) mit einem Ventilschließelement gekoppelt ist oder ein Ventilschließelement ausbildet, das vorzugsweise zum Schließen des Zulaufs (4) in Eingriff mit einer seitlichen Öffnung (13) des Zulaufs (4) bringbar ist.

4. Vorrichtung (1) nach einem der vorhergehenden Ansprüche,
**dadurch gekennzeichnet, dass** der Magnetanker (8) in axialer Richtung von mindestens einer Druckausgleichsöffnung (14) durchsetzt ist.

5. Vorrichtung (1) nach einem der vorhergehenden Ansprüche,
**dadurch gekennzeichnet, dass** der Magnetanker (8) zur Aufnahme der Ventilfeder (9) zumindest abschnittsweise hülsenförmig ausgebildet ist.

6. Vorrichtung (1) nach einem der vorhergehenden Ansprüche,
**dadurch gekennzeichnet, dass** die Magnetbaugruppe (7) eine von einem Außenpolkörper (15) umgebene Magnetspule (16) umfasst, in die ein topf- oder hülsenförmiges Trennelement (17) aus einem amagnetischen Material eingesetzt ist, über welches der Magnetanker (8) geführt ist.

7. Vorrichtung (1) nach Anspruch 6,
**dadurch gekennzeichnet, dass** das topf- oder hülsenförmige Trennelement (17) über einen Ringbund (18) an einer Gehäuseaußenwandfläche (19) der Vorrichtung (1) unmittelbar oder mittelbar über ein Dichtelement (20) abgestützt ist.

8. Vorrichtung (1) nach einem der vorhergehenden Ansprüche,
**dadurch gekennzeichnet, dass** der Zulauf (4) in einen Ansaugraum (21) der Strahlpumpe (2) mündet, wobei in dem Ansaugraum (21) die Treibdüse (3) angeordnet ist und/oder wobei der Ansaugraum (21) über ein Mischrohr (22) und einen Diffusor (23) mit dem Ablauf (5) verbunden ist.

9. Vorrichtung (1) nach einem der vorhergehenden Ansprüche,
**dadurch gekennzeichnet, dass** der Treibdüse (3) ein Regelventil (24) zum Eindosieren von frischem Anodengas vorgeschaltet ist oder die Treibdüse (3) in ein Dosierventil für frisches Anodengas integriert ist.

10. Vorrichtung (1) nach einem der vorhergehenden Ansprüche,
**dadurch gekennzeichnet, dass** mindestens zwei Strahlpumpen (2) parallel geschaltet sind, die lastabhängig aktivierbar sind.

11. Brennstoffzellensystem (10) mit einer Vorrichtung (1) nach einem der vorhergehenden Ansprüche, wobei die Vorrichtung (1) in einen Anodenkreis (11) des Brennstoffzellensystems (10) integriert ist.

## Claims

1. Device (1) for recirculating anode gas in an anode circuit (11) of a fuel cell system (10), comprising at least one jet pump (2) with a driving nozzle (3) for introducing fresh anode gas, preferably hydrogen, an inlet (4) for recirculated anode gas and an outlet (5) for fresh and recirculated anode gas, **characterized in that** an actively controllable valve (6) intended for closing and opening the inlet (4) and comprising a magnet assembly (7), for acting on a reciprocating armature (8), and a valve spring (9) is arranged in the area of the inlet (4).

2. Device (1) according to Claim 1,
**characterized in that** the magnet assembly (7) of the valve (6) is arranged outside a hydrogen-conducting area (12) of the device (1) and/or the direction of action of the magnet assembly (7) is perpendicular to the main flow direction in the inlet (4).

3. Device (1) according to Claim 1 or 2,
**characterized in that** the armature (8) is coupled to a valve closing element or forms a valve closing element which can preferably be made to engage with a lateral opening (13) of the inlet (4) in order to close the inlet (4).

4. Device (1) according to one of the preceding claims,
**characterized in that** the armature (8) is passed through in the axial direction by at least one pressure equalizing opening (14).

5. Device (1) according to one of the preceding claims,
**characterized in that** the armature (8) is at least partly sleeve-shaped in order to receive the valve spring (9).

6. Device (1) according to one of the preceding claims,
**characterized in that** the magnet assembly (7) comprises a magnetic coil (16) which is surrounded by an outer pole body (15) and inserted in which is a pot- or sleeve-shaped separating element (17) of a non-magnetic material, by way of which the armature (8) is guided.

7. Device (1) according to Claim 6,
**characterized in that** the pot- or sleeve-shaped separating element (17) is supported by way of an annular collar (18) on an outer housing wall surface (19) of the device (1) directly or indirectly by way of a sealing element (20).

8. Device (1) according to one of the preceding claims,
**characterized in that** the inlet (4) opens into a suction chamber (21) of the jet pump (2), wherein the driving nozzle (3) is arranged in the suction chamber (21) and/or wherein the suction chamber (21) is connected to the outlet (5) by way of a mixing tube (22) and a diffuser (23).

9. Device (1) according to one of the preceding claims,
**characterized in that** a control valve (24) for metering in fresh anode gas is located upstream of the driving nozzle (3), or the driving nozzle (3) is integrated in a metering valve for fresh anode gas.

10. Device (1) according to one of the preceding claims,
**characterized in that** at least two jet pumps (2) which can be activated load-dependently are connected in parallel.

11. Fuel cell system (10) having a device (1) according to one of the preceding claims, wherein the device (1) is integrated in an anode circuit (11) of the fuel cell system (10).

## Revendications

1. Dispositif (1) de recirculation de gaz d'anode dans un circuit d'anode (11) d'un système de pile à combustible (10), comprenant au moins une pompe à jet (2) munie d'une buse de propulsion (3) destinée à introduire du gaz d'anode frais, de préférence de l'hydrogène, une arrivée (4) pour le gaz d'anode mis en recirculation et un écoulement (5) pour le gaz d'anode frais et mis en recirculation, **caractérisé en ce qu'**une vanne (6) qui peut être commandée activement pour fermer et libérer l'arrivée (4) est disposée dans la zone de l'arrivée (4), laquelle comprend un module magnétique (7) destiné à agir sur un induit magnétique (8) mobile en va-et-vient ainsi qu'un ressort de vanne (9).

2. Dispositif (1) selon la revendication 1,
**caractérisé en ce que** le module magnétique (7) de la vanne (6) est disposé à l'extérieur d'une zone de guidage d'hydrogène (12) du dispositif (1) et/ou la direction d'action du module magnétique (7) suit un tracé perpendiculaire à la direction d'écoulement principale dans l'arrivée (4).

3. Dispositif (1) selon la revendication 1 ou 2,
**caractérisé en ce que** l'induit magnétique (8) est couplé à un élément de fermeture de vanne ou forme un élément de fermeture de vanne qui peut être mis en prise avec une ouverture latérale (13) de l'arrivée (4), de préférence pour fermer l'arrivée (4).

4. Dispositif (1) selon l'une des revendications précédentes,
**caractérisé en ce que** l'induit magnétique (8) est traversé dans la direction axiale par au moins une ouverture de compensation de pression (14).

5. Dispositif (1) selon l'une des revendications précédentes,
**caractérisé en ce que** l'induit magnétique (8) est configuré au moins dans certaines portions en forme de douille pour recevoir le ressort de vanne (9).

6. Dispositif (1) selon l'une des revendications précédentes,
**caractérisé en ce que** le module magnétique (7) comprend une bobine magnétique (16) entourée par un corps polaire extérieur (15), dans laquelle est inséré un élément de séparation (17) en forme de pot ou de douille en un matériau amagnétique, sur lequel est guidé l'induit magnétique (8).

7. Dispositif (1) selon la revendication 6,
**caractérisé en ce que** l'élément de séparation (17) en forme de pot ou de douille est soutenu par un collet annulaire (18) au niveau d'une surface de paroi extérieure de boîtier (19) du dispositif (1), directement ou indirectement par le biais d'un élément d'étanchéité (20).

8. Dispositif (1) selon l'une des revendications précédentes,
**caractérisé en ce que** l'arrivée (4) débouche dans une chambre d'aspiration (21) de la pompe à jet (2), la buse de propulsion (3) étant disposée dans la chambre d'aspiration (21) et/ou la chambre d'aspiration (21) étant reliée à l'écoulement (5) par le biais d'un tube de mélange (22) et d'un diffuseur (23).

9. Dispositif (1) selon l'une des revendications précédentes,
**caractérisé en ce qu'**une vanne de régulation (24) est montée en amont de la buse de propulsion (3) pour le dosage de gaz d'anode frais ou la buse de propulsion (3) est intégrée dans une vanne de dosage pour le gaz d'anode frais.

10. Dispositif (1) selon l'une des revendications précédentes,
**caractérisé en ce qu'**au moins deux pompes à jet (2) sont montées en parallèle, lesquelles peuvent être activées en fonction de la charge.

11. Système de pile à combustible (10) comprenant un dispositif (1) selon l'une des revendications précédentes, le dispositif (1) étant intégré dans un circuit d'anode (11) du système de pile à combustible (10).
